# EUROPEAN PATENT SPECIFICATION

(11) **EP 1 666 807 B1**
(45) Date of publication and mention of the grant of the patent: **04.11.2009**
(21) Application number: 05026398.7
(22) Date of filing: 02.12.2005
(51) Int. Cl.: F24F 11/00

(54) **Airconditioning generation system capable of solving unbalanced phase and method for the same**
Klimaerzeugungsanlage zum Ausgleichen einer nicht balancierten Phase und Verfahren dafür
Système de conditionnement d'air capable de résoudre des phases non équilibrées et méthode correspondante

(30) Priority: 03.12.2004 KR 2004101255
(43) Date of publication of application: 07.06.2006
(73) Proprietor: LG Electronics, Inc., Seoul 150-010 (KR)
(72) Inventor: Choe, Yeong Seop, Buchun-si Kyunggi-do 422-751 (KR); Cho, Eun Jun, Buchun-si Kyunggi-do 422-751 (KR); Lee, Jae Won, Seoul 152-092 (KR); Chung, Baik Young, Kyeyang-ku Inchun-si 407-710 (KR); Ryu, Yun Ho, Seoul 135-906 (KR)
(74) Representative: Vossius & Partner

(56) References cited:
- GB-A- 2 287 783
- US-A- 4 557 114
- PATENT ABSTRACTS OF JAPAN vol. 007, no. 254 (M-255), 11 November 1983 (1983-11-11) & JP 58 136931 A (HITACHI SEISAKUSHO KK), 15 August 1983 (1983-08-15)
- PATENT ABSTRACTS OF JAPAN vol. 1995, no. 03, 28 April 1995 (1995-04-28) & JP 06 347085 A (SANYO ELECTRIC CO LTD), 20 December 1994 (1994-12-20)
- PATENT ABSTRACTS OF JAPAN vol. 1997, no. 05, 30 May 1997 (1997-05-30) & JP 09 009487 A (SANYO ELECTRIC CO LTD), 10 January 1997 (1997-01-10)

## Description

The present invention relates to an airconditioning generation system capable of solving an unbalanced phase and a method for the same, and more particularly to an airconditioning generation system capable of solving an unbalanced phase and a method for the same, which can prevent the occurrence of an unbalanced phase of a power-supply signal applied to a plurality of outdoor units connected to a plurality of indoor units due to a difference in load.

It is necessary for a driving power-supply signal to drive electrical devices for use in households or factories. Generally, the above-mentioned electrical devices have been designed to receive necessary power-supply signals from a commercial power source provided from the Korea Electric Power Corporation (KEPCO).

However, if a plurality of indoor units and a plurality of outdoor units are installed in households or factories, it may be difficult for the commercial power-supply signal received from an external part to be sufficiently applied to all driving loads of the indoor and outdoor units, such that a large number of households or factories may frequently use additional self-generation systems, respectively.

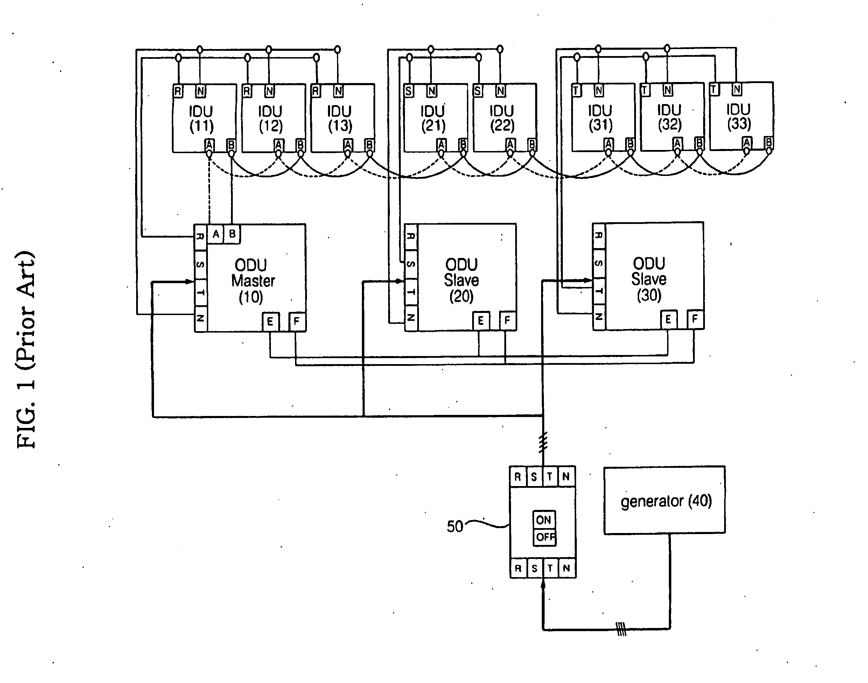

FIG. 1 is a structural diagram illustrating a conventional airconditioning generation system.

Referring to FIG. 1, the airconditioning generation system includes a plurality of indoor units 11, 12, 13, 21, 22, 31, 32, and 33 installed in individual rooms to cool or heat air in the rooms; a plurality of outdoor units 10, 20, and 30 connected to individual indoor units; and a generator 40 for generating a three-phase power-supply signal, and providing the outdoor units 10, 20, and 30 with the three-phase power-supply signal.

The airconditioning generation system further includes a molded-case circuit breaker 50 for detecting current values of individual phases of the three-phase power-supply signal generated from the generator 40, and preventing individual outdoor units 10, 20, and 30 from being powered on when an unbalanced phase occurs in the three-phase power-supply signal.

Although the outdoor units 10, 20, and 30 may be driven by the three-phase power-supply signal generated from the generator 40, the indoor units 11, 12, 13, 21, 22, 31, 32, and 33 are driven by a single-phase power-supply signal, such that the indoor units 11, 12, 13, 21, 22, 31, 32, and 33 are connected to a single-phase power-supply terminal from among individual power-supply terminals of the outdoor units 10, 20, and 30, and then receive a necessary power-supply signal via the single-phase power-supply terminal.

If an unbalanced phase occurs in a power-supply signal applied to the outdoor units 10, 20, and 30 due to a difference in driving load of indoor units connected to the outdoor units 10, 20, and 30, the molded-case circuit breaker 50 connected to the generator 40 prevents the power-supply signal from being applied to individual outdoor units 10, 20, and 30.

In other words, the airconditioning generation system acts as a three-phase four-line system, receives a three-phase power-supply signal composed of an R-phase power-supply signal, an S-phase power-supply signal, and a T-phase power-supply signal, and includes a neural(N)-line connected to the R/S/T-phase power-supply signals. The R-phase power-supply signal, the S-phase power-supply signal, and the T-phase power-supply signal have a phase difference of 120°, and establish phase equilibrium therebetween.

In this case, the R/S/T-phase power-supply signals generally establish the above-mentioned phase equilibrium, such that a current signal is not applied to the N line. However, if loads connected to individual phase power-supply signals have different magnitudes, there is an unexpected difference in an amount of a current signal applied to individual phase power-supply signals, such that the above-mentioned phase equilibrium is broken, and the current signal flows in the N line.

The above-mentioned state is called an unbalanced phase state. If the current signal flows in the N line as described above, a potential of the N line is increased such that a controller for controlling the airconditioning generation system may malfunction.

If an excessive current signal flows in a one-phase line or a two-phase line due to the unbalanced phase, a compressor contained in each of the generator, the indoor units, and the outdoor units is overheated, such that the compressor may be damaged or a microprocessor of the generator 40 may incur a malfunction or a faulty operation, resulting in the occurrence of a malfunction of the airconditioning generation system, and endurance deterioration thereof.

The molded-case circuit breaker 50 detects the value of a current signal flowing in the N line using an internal sensor. If the molded-case circuit breaker 50 detects the value of the current signal, it determines the occurrence of an unbalanced phase, such that it blocks a power-supply signal from being transmitted from the generator 40 to individual outdoor units 10, 20, and 30.

The molded-case circuit breaker 50 for use in the above-mentioned conventional airconditioning generation system generally aims to protect the generator 40 from danger, such that it immediately blocks a power-supply signal from being applied to all of the indoor and outdoor units if an unbalanced phase occurs by one of the outdoor units.

Therefore, if the power-supply signal is not applied to the indoor and outdoor units, a user must manually adjust individual loads of the indoor units 11, 12, 13, 21, 22, 31, 32, and 33, or the outdoor units 10, 20, and 30 to remove the unbalanced phase. The user cannot use the above-mentioned airconditioning generation system at all locations of a building or factory equipped with the system until the unbalanced phase is removed, resulting in greater inconvenience of the user and reduction of product reliability.

Moreover, Abstract of JP-A-58136931 discloses control method for air conditioner comprising the steps of detecting the whole electric current of the air conditioner and of its auxiliary heater; and the step of changing the phase by a phase angle changing circuit, when the current is not equal to a reference current.

Moreover, Abstract of JP-A-6347085 discloses a multiple air conditioner connected to a single commercial power source whereby the unbalanced rate of equipments is kept below a present value; wherein three indoor fans of the air conditioner are connected to terminals S and T, and three other indoor fans are connected to terminals T and T of the 3-phase power source.

Therefore, the present invention has been made in view of the above problems, and it is an object of the invention to provide an airconditioning generation system capable of solving an unbalanced phase and a method for the same, which can prevent the occurrence of an unbalanced phase in a generation system capable of providing an airconditioner with a three-phase power-supply signal, such that they prevent the occurrence of a malfunction or damage of a manufactured product due to the unbalanced phase, and increase product reliability.

It is another object of the invention to provide an air-conditioning generation system for greatly increasing its power factor and a method for the same, which detect an amount of a current signal applied to individual airconditioners to prevent the occurrence of an unbalanced phase, determine the presence or absence of the unbalanced phase, and change power-supply wiring arrangement of individual airconditioners according to the determined result associated with the unbalanced phase.

In accordance with one aspect of the present invention, these objects are accomplished by providing an airconditioning generation system capable of solving an unbalanced phase, comprising: a plurality of indoor units; and a plurality of outdoor units, wherein power values of individual-phase driving power-supply signals consumed by the indoor and outdoor units are summed, and a power-supply wiring structure of some parts of the indoor and outdoor units is automatically changed to another wiring structure when there is a difference in power consumption values of individual phases, resulting in three-phase equilibrium.

Preferably, the distribution unit includes: a sensor for detecting a current signal flowing in a wiring structure which receives the power-supply signal from the generator and transmits the received power-supply signal to the indoor and outdoor units; and a distribution controller for calculating the sum of individual-phase power consumption of the indoor and outdoor units according to the output current value of the sensor, and changing the wiring structure to another wiring structure when there is a difference in the sum of the individual-phase power consumption.

Preferably, the distribution unit includes: a communication unit for communicating with the outdoor units, and receiving power consumption data of the indoor and outdoor units from the outdoor units; and a distribution controller for calculating the sum of individual-phase power consumption of the indoor and outdoor units, and changing a wiring structure capable of transmitting a power-supply signal from the generator to the indoor and outdoor units when there is a difference in the sum of the individual-phase power consumption.

In accordance with another aspect of the present invention, there is provided a method for solving an unbalanced phase in an airconditioning generation system, comprising the steps of: a) calculating power consumption of indoor and outdoor units; b) calculating the sum of the calculated power consumption values to determine the presence or absence of the unbalanced phase; and c) changing a wiring structure of a power-supply signal supplied to the indoor or outdoor units when the presence of the unbalanced phase is determined.

The airconditioning generation system includes a distribution unit capable of detecting individual-phase power values consumed by the indoor units, and changing a wiring structure of a phase power-supply signal transmitted from the generator to the outdoor units. If the unbalanced phase occurs in the three-phase power-supply signal, the airconditioning generation system automatically solves the unbalanced phase, such that it prevents a product from being damaged, and increases product reliability.

Also, if the unbalanced phase occurs in the three-phase power-supply signal, the airconditioning generation system changes a wiring structure of individual-phase power-supply signals to establish three-phase equilibrium, improves power factor, such that it reduces power consumption of an overall system and costs thereof.

The above objects, and other features and advantages of the present invention will become more apparent after reading the following detailed description when taken in conjunction with the drawings, in which:
FIG. 1 is a structural diagram illustrating a conventional airconditioning generation system;
FIG. 2 is a structural diagram illustrating an airconditioning generation system in accordance with a first preferred embodiment of the present invention;
FIG. 3 is a flow chart illustrating a method for operating the airconditioning generation system shown in FIG. 2 in accordance with the first preferred embodiment of the present invention;
FIG. 4 is a structural diagram illustrating an airconditioning generation system in accordance with a second preferred embodiment of the present invention; and
FIG. 5 is a flow chart illustrating a method for operating the airconditioning generation system shown in FIG. 4 in accordance with the second preferred embodiment of the present invention.

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may make the subject matter of the present invention rather unclear.

For example, an airconditioning generation system capable of solving an unbalanced phase according to the present invention includes 3 outdoor units and 8 indoor units, but it is not limited to this example, and is applicable to other examples without limiting the number of outdoor or indoor units connected to a generator.

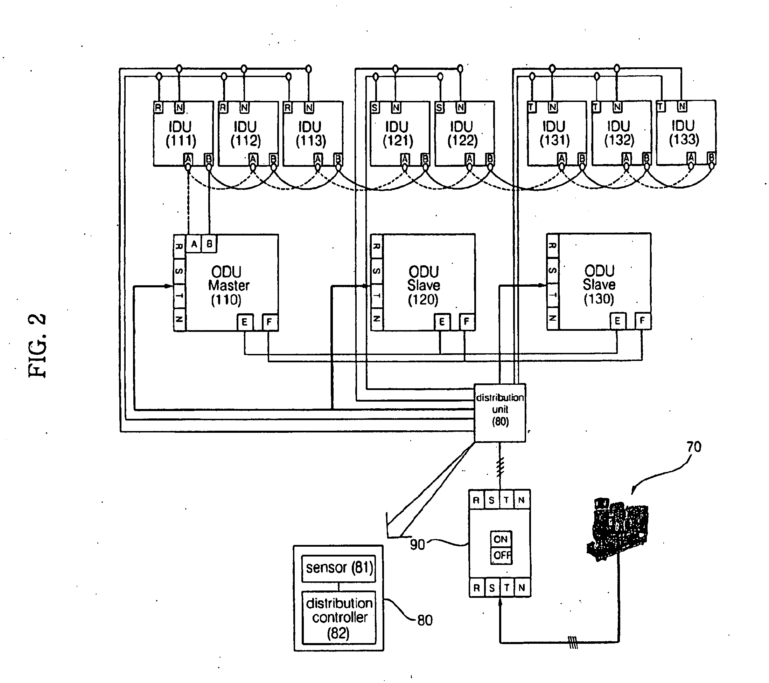

FIG. 2 is a structural diagram illustrating an airconditioning generation system in accordance with a first preferred embodiment of the present invention.

Referring to FIG. 2, the airconditioning generation system in accordance with the first preferred embodiment of the present invention includes 8 indoor units 111, 112, 113, 121, 122, 131, 132, and 133; 3 outdoor units 110, 120, and 130 connected to the eight indoor units 111, 112, 113, 121, 122, 131, 132, and 133; a generator 70 for generating a drive power-supply signal of the indoor and outdoor units by driving an engine; and a distribution unit 80 for dividing a three-phase power-supply signal generated from the generator 70 into individual phase signals, and providing the outdoor or indoor units with the divided phase signals.

The airconditioning generation system may further include a molded-case circuit breaker 90 connected to the generator 70 and the distribution unit 80. If an unbalanced phase occurs irrespective of operations of the distribution unit 80, the molded-case circuit breaker 90 blocks individual outdoor units 110, 120, and 130 from receiving a power-supply signal.

In this case, the first outdoor unit 110 is connected to three indoor units 111, 112, and 113, the second outdoor unit 120 is connected to two indoor units 121 and 122, and the third outdoor unit 130 is connected to three indoor units 131 and 132, such that they adjust an amount of a refrigerant flowing in individual indoor units.

The three-phase power-supply signal generated from the generator 70 is divided into R-, S-, and T-phase signals via the distribution unit 80, and is applied to individual outdoor units 110, 120, and 130. Individual outdoor units transmit the R/S/T-phase power-supply signals to individual indoor units.

In the meantime, the generator 70 may be implemented with a general three-phase voltage generator capable of providing the indoor units 111, 112, 113, 121, 122, 131, 132, and 133 and the outdoor units 110, 120, and 130 with a power-supply signal. For example, a cogeneration system may be used as the generator 70.

The cogeneration system generates electricity using a cogeneration generator, and uses waste heat of the cogeneration generator. The cogeneration system includes an engine, and a cogeneration generator for generating power using rotating force of the engine, and further includes a heat provider. The heat provider receives either waste heat of a cooling water of the engine or other waste heat of discharge gas of the engine, and transmits the received heat to a target such as an airconditioner.

Also, the power generated from the cogeneration generator is used to operate a variety of electric devices such as an electric lamp, and an airconditioner, etc. The heat provider receives waste heat of the cooling water of the engine or other waste heat of discharge gas of the engine, such that it performs a hot-water supply operation using the received waste heat or provides the airconditioner with the received waste heat.

The distribution unit 80 includes a distribution controller 82, which divides the three-phase power-supply signal received from the generator 70 into individual phase signals, transmits the divided phase signals to the outdoor units 110, 120, and 130 and the indoor units 111, 112, 113, 121, 122, 131, 132, and 133, and controls a wiring board to which the three-phase power-supply signal or a single-phase power-supply signal is applied.

The distribution unit 80 further includes a sensor 81 for detecting the value of a current signal flowing in the wiring structure capable of providing the indoor and outdoor units with a power-supply signal, such that the distribution controller 82 controls the wiring structure according to the output value of the sensor 81.

The distribution controller 82 receives the value of a current signal supplied to individual indoor units 111, 112, 113, 121, 122, 131, 132, and 133 and individual outdoor units 110, 120, and 130 from the sensor 81, and calculates the value of a power signal consumed by the indoor and outdoor units in individual phase signals according to the received current value, and controls the wiring structure to establish phase equilibrium in individual phase signals according to the calculated power value.

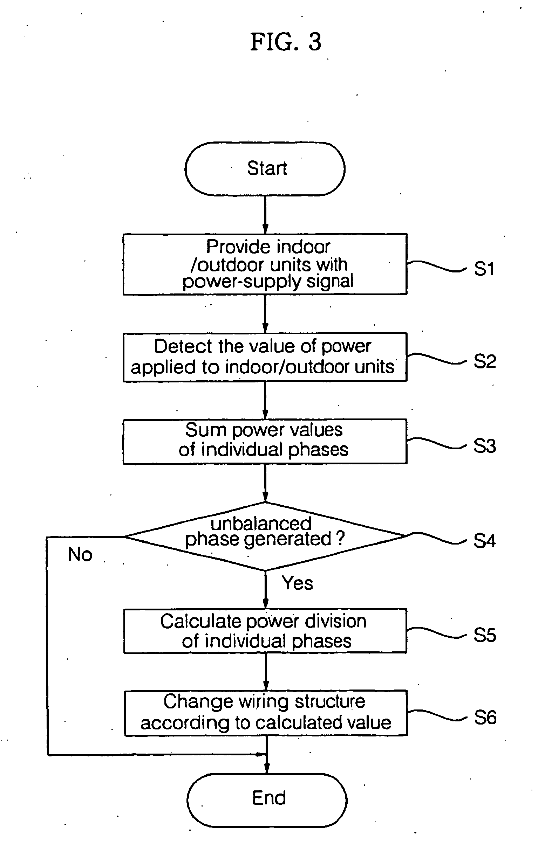

FIG. 3 is a flow chart illustrating a method for solving an unbalanced phase of the airconditioning generation system in accordance with the first preferred embodiment of the present invention. The method for solving the unbalanced phase of the airconditioning generation system will hereinafter be described with reference to FIG. 3.

Referring to FIG. 3, an engine of the generator 70 is driven to generate a power-supply signal at step S1.

The power-supply signal is transmitted to the distribution unit 80 connected to the generator 70, and is supplied to the outdoor units. The power-supply signal is divided into individual phase signals, such that it is supplied to the indoor units as a single-phase power-supply signal.

The distribution unit 80 detects the value of a current signal of the power-supply signal transmitted to individual indoor and outdoor units using the sensor 81, calculates the value of consumed power on the basis of the detected current value, and sums the calculated power value in individual phases at step S2.

For example, provided that each of the indoor units 111, 112, 113, 121, 122, 131, 132, and 133 connected to the outdoor units 110, 120, and 130 consumes predetermined power of 3730 W (5HP), and each outdoor unit consumes predetermined power of 7460 W (10HP), power consumed by the first outdoor unit 110 and the indoor units 111, 112, and 113 connected to the first outdoor unit 110 is an R-phase signal having a predetermined power value of 18700 W (25HP), power consumed by the second outdoor unit 120 and the indoor units 121, 122, and 123 connected to the second outdoor unit 120 is an S-phase signal having a predetermined power value of 14900 W (20HP), power consumed by the third outdoor unit 130 and the indoor units 131, 132, and 133 connected to the third outdoor unit 130 is a T-phase signal having a predetermined power value of 18700 W (25HP).

In this case, the distribution unit 80 detects the value of a current signal of a wiring board receiving the R/S/T-phase power-supply signals, such that it can determine how much R/S/T-phase power-supply signals are supplied to individual indoor and outdoor units in the same manner as in the above-mentioned power consumption calculation method.

If there is a difference in the sum of power consumption of individual phases, the distribution controller determines the occurrence of the unbalanced phase, and calculates an amount of power to be consumed by individual phase power-supply signals to establish phase equilibrium at steps S3~ S5.

A wiring structure of some parts of the indoor or outdoor units is changed according to the amount of the calculated power to establish the phase equilibrium at step S6.

Therefore, if the R-phase signal consumes the power of 18700 (25HP) the S-phase signal consumes the power of 14900 W (20HP), and the T-phase signal consumes the power of 18700 W (25HP) according to the calculated power consumption of individual phases, the power consumed by the S-phase signal is relatively less than those of the R-phase and T-phase signals, resulting in the occurrence of an unbalanced phase. Each of the R/S/T-phase signals must consume power of 52200 W/3 (70HP/3) to establish the phase equilibrium, such that a wiring structure is controlled to provide the first and third outdoor units with the S-phase power-supply signal suitable for the power of 52200 W/3 (70HP/3).

Also, the distribution unit 80 repeatedly checks load of individual phases after the phase equilibrium is maintained, and changes the wiring structure to establish the phase equilibrium.

An airconditioning generation system according to a second preferred embodiment of the present invention does not mount the sensor to the distribution unit, and calculates the value of power consumption of individual phases by allowing the distribution unit to communicate with the outdoor units, differently from the above-mentioned airconditioning generation system according to the first preferred embodiment in which the sensor is mounted to the distribution unit.

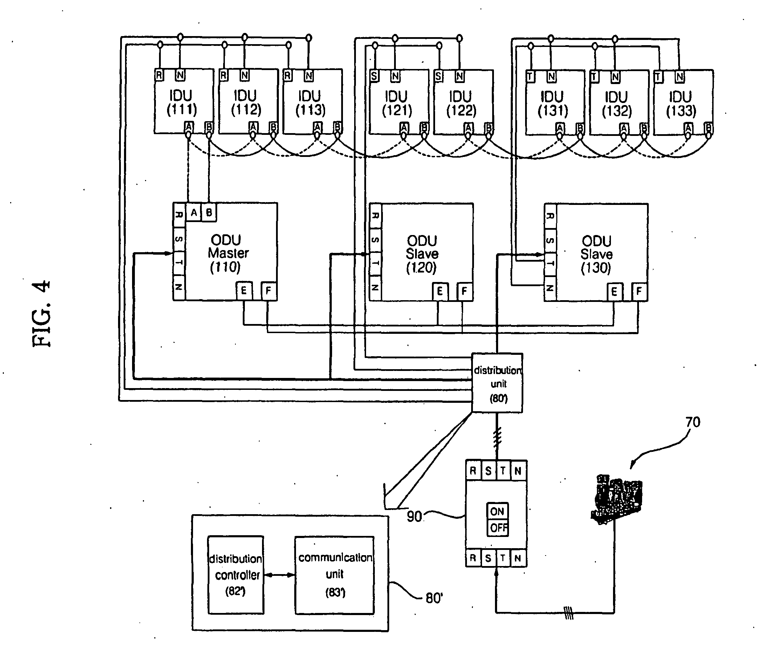

FIG. 4 is a structural diagram illustrating the airconditioning generation system in accordance with a second preferred embodiment of the present invention.

Referring to FIG. 4, a plurality of indoor units 111, 112, 113, 121, 122, 131, 132, and 133 are connected to outdoor units 10, 20, and 30, and communicate with the outdoor units 10, 20, and 30, such that information associated with power consumption or load are communicated between the indoor units and the outdoor units.

In this case, the indoor units are connected to the outdoor units via a cable, and communicate with the outdoor units according to an RS-485 communication scheme or a power-line communication scheme, such that a variety of wired/wireless communication schemes can be established between the indoor units and the outdoor units to implement an object of the present invention.

The distribution unit 80' divides a three-phase power-supply signal generated from the generator 70 into individual phase signals, and transmits the divided phase signals to the indoor and outdoor units. The distribution unit 80' includes a communication unit 83 communicating with the outdoor units 110, 120, and 130, and a distribution controller 82' for determining the presence or absence of an unbalanced phase on the basis of transmission/reception data of the communication unit 83, and changing a wiring structure according to the determined result associated with the unbalanced phase.

In the meantime, if the airconditioning system composed of the indoor and outdoor units includes a plurality of outdoor units, at least one outdoor unit is determined to be a master, and the remaining outdoor units are determined to be slaves, such that the slave outdoor units can be centrally controlled according to operation commands of the master outdoor unit. According to the second preferred embodiment of the present invention, the first outdoor unit 110 is determined to be the master outdoor unit, and the second and third outdoor units 120 and 130 are determined to be the slave outdoor units.

In this case, the indoor unit 111 is connected to the outdoor unit 110 according to an RS-485 communication scheme, communicates with the outdoor unit 110, and is controlled by the outdoor unit 110. Other indoor units are connected to the indoor unit 111 and the outdoor unit 110 according to the RS-485 communication scheme, and are controlled by the master outdoor unit 110.

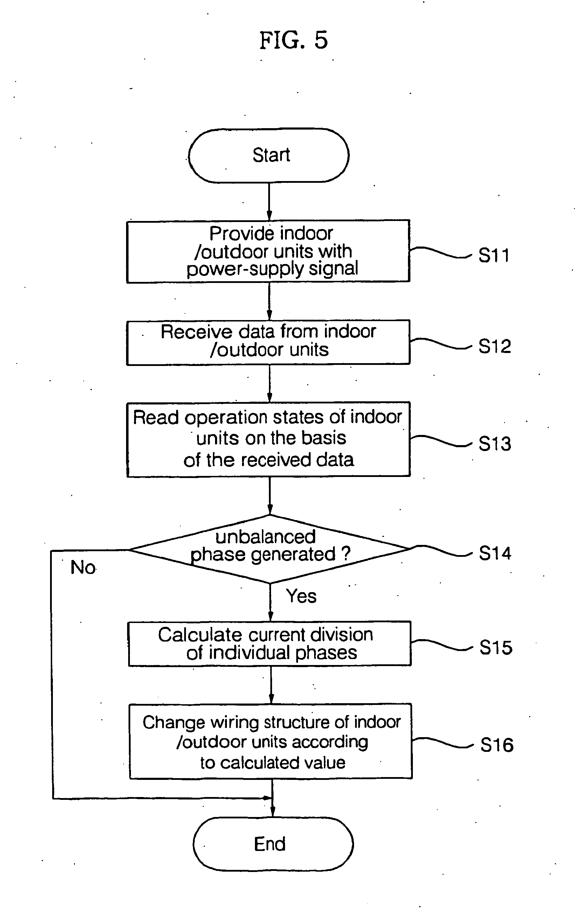

FIG. 5 is a flow chart illustrating a method for solving an unbalanced phase of the airconditioning generation system shown in FIG. 4 in accordance with the second preferred embodiment of the present invention.

Referring to FIG. 5, an engine of a generator is driven to generate a power-supply signal.

The power-supply signal is transmitted to a distribution unit connected to the generator, and is supplied to the outdoor units. Also, the power-supply signal is divided into individual phase signals, such that it is supplied to indoor units as a single-phase power-supply signal at step S11.

Individual indoor units or slave outdoor units communicate with a master outdoor unit, and transmits their power consumption data to the master outdoor unit at step S12.

The distribution unit communicates with the master outdoor unit, such that it receives power consumption data of individual indoor and outdoor units. The distribution unit reads the power consumption data, and recognizes the value of power of a three-phase or single-phase power-supply signal consumed by individual indoor and outdoor units at step S13.

The power values recognized in individual phases are summed, and the magnitudes of the power values are compared with each other, such that the presence or absence of an unbalanced phase can be determined according to the comparison result at step S14.

If the occurrence of the unbalanced phase is determined, the distribution unit changes a wiring structure of the outdoor units or some parts of the outdoor units according to the calculated power value in the same manner as in the first preferred embodiment of the present invention, such that phase equilibrium can be established at steps S15~ S16.

The distribution unit repeatedly checks load of individual phases after the phase equilibrium is maintained, and changes a wiring structure to establish the phase equilibrium.

In the same manner as in the first preferred embodiment, provided that power consumption of the R-phase signal is 18700 W (25HP), power consumption of the S-phase signal is 14900 W (20HP), and power consumption of the T-phase signal is 18700 W (25HP), a wiring structure for providing the outdoor units with a power-supply signal is changed to another wiring structure in which power of 52200 W/3 (70HP/3) is consumed by individual phase signals. For example, the S-phase power-supply signal designed to provide the second outdoor unit with a power-supply signal is also applied to the first and third outdoor units, such that power consumption of the S-phase power-supply signal is increased and at the same time other power consumption of the R/T-phase power-supply signals is reduced, resulting in phase equilibrium in three phases.

As apparent from the above description, an airconditioning generation system and method capable of solving an unbalanced phase includes: one or more indoor units; one or more outdoor units for providing the indoor units with a single-phase power-supply signal; a generator for providing the outdoor units with a power-supply signal; and a distribution unit for checking individual-phase power values consumed by the indoor units, changing a phase of the power-supply signal transmitted from the generator to the outdoor units according to the checked power values, and establishing phase equilibrium in three phases. Therefore, if the unbalanced phase of a three-phase power-supply signal occurs when the power-supply signal is supplied to an airconditioner, the present invention solves the unbalanced phase, such that it prevents a product from being damaged and increases product reliability.

## Claims

1. An airconditioning generation system capable of solving an unbalanced phase, comprising:
a plurality of indoor units (111, 112, 113, 121, 122, 131, 132, 133); and
a plurality of outdoor units (110, 120, 130),
wherein power values of individual-phase driving power-supply signals consumed by the indoor and outdoor units are summed, and a power-supply wiring structure of some parts of the indoor and outdoor units is automatically changed to another wiring structure when there is a difference in power consumption values of individual phases, resulting in three-phase equilibrium.

2. An airconditioning generation system capable of solving an unbalanced phase, comprising:
an airconditioning system including one or more indoor units (111, 112, 113, 121, 122, 131, 132, 133) and one or more outdoor units (110, 120, 130);
a generator (70) for providing the airconditioning system with a driving power-supply signal; and
a distribution unit (80, 80') for detecting power values of individual-phase driving power-supply signals of the airconditioning system, changing some parts of phases of the power-supply signal transmitted from the generator (70) to the airconditioning system, and establishing three-phase equilibrium.

3. The airconditioning generation system according to claim 1 or 2, wherein the outdoor units (110, 120, 130) are driven by a three-phase power-supply signal.

4. The airconditioning generation system according to claim 1, 2 or 3, wherein the indoor units (111, 112, 113, 121, 122, 131, 132, 133) are driven by a single-phase power-supply signal.

5. The airconditioning generation system according to claim 2, 3 or 4, wherein the distribution unit (80) includes:
a sensor (81) for detecting a current signal flowing in a wiring structure which receives the power-supply signal from the generator (70) and transmits the received power-supply signal to the indoor and outdoor units; and
a distribution controller (82) for calculating the sum of individual-phase power consumption of the indoor and outdoor units according to.the output current value of the sensor (81), and changing the wiring structure to another wiring structure when there is a difference in the sum of the individual-phase power consumption.

6. The system according to claim 1, 2, 3, 4 or 5,
, wherein the indoor units communicate with the outdoor units, and the indoor units (111, 112, 113, 121, 122, 131, 132, 133) transmits power consumption data to the outdoor units (110, 120, 130).

7. The airconditioning generation system according to claim 6, wherein the distribution unit (80') includes:
a communication unit. (83) for communicating with the outdoor units (110, 120, 130), and receiving power consumption data of the indoor and outdoor units from the outdoor units; and
a distribution controller (82') for calculating the sum of individual-phase power consumption of the indoor and outdoor units, and changing a wiring structure capable of transmitting a power-supply signal from the generator (70) to the indoor and outdoor units when there is a difference in the sum of the individual-phase power.consumption.

8. The airconditioning generation system according to claim 5, 6 or 7, wherein the distribution controller (82, 82'), if there is a difference in the individual-phase power consumption, connects a phase power-supply signal having less power consumption to other outdoor units or other indoor units, and increases power consumption of the phase power-supply signal.

9. The system according to any one of claims 1 to 8,
wherein the generator (70) is a cogeneration generator.

10. A method for solving an unbalanced phase in an airconditioning generation system, comprising the steps of:
a) calculating power consumption of indoor and outdoor units (S1∼ S3, S11∼ S13);
b) calculating the sum of the calculated power consumption values to determine the presence or absence of the unbalanced phase (S4, S14); and
c) changing a wiring structure of a power-supply signal supplied to the indoor or outdoor units when the presence of the unbalanced phase is determined (S5, S6, S15, S16).

11. The method according to claim 10, wherein the step a) includes the steps of:
a1) detecting a value of a current signal transmitted from a generator to the outdoor and indoor units (S2); and
a2) calculating power consumption of individual outdoor unit and indoor units on the basis of the detected current value (S3).

12. The method according to claim 10 or 11, wherein the step a) includes the steps of:
a3) transmitting data associated with power consumption in a predetermined range from the indoor units to the outdoor units (S12); and
a4) calculating a value of power consumption of individual indoor and outdoor units on the basis of the power consumption data received from the outdoor units (S13).

13. The method according to claim 10, 11 or 12, further comprising the steps of:
allowing a generator to generate a three-phase power-supply signal before performing the step a); and
dividing the three-phase power-supply signal generated from the generator into three single-phase power-supply signals, and providing the outdoor units with the single-phase power-supply signals (S1, S11).

14. The method according to claim 13, further comprising the step of:
repeating the above steps until the unbalanced phase of the three-phase power-supply signal is solved.

## Patentansprüche

1. Klimaerzeugungsanlage, die imstande ist, eine unsymmetrische Phase zu beheben, die aufweist:
mehrere Inneneinheiten (111, 112, 113, 121, 122, 131, 132, 133); und
mehrere Außeneinheiten (110, 120, 130),
wobei Energiewerte von Einzelphasenbetriebsenergieversorgungssignalen, die durch die Innen- und Außeneinheiten verbraucht werden, summiert werden, und eine Energieversorgungsverdrahtungsstruktur einiger Teile der Innen- und Außeneinheiten automatisch zu einer anderen Verdrahtungsstruktur geändert wird, wenn eine Differenz der Energieverbrauchswerte von Einzelphasen vorliegt, was zu einem Dreiphasengleichgewicht führt.

2. Klimaerzeugungsanlage, die imstande ist, eine unsymmetrische Phase zu beheben, die aufweist:
eine Klimaanlage, die eine oder mehrere Inneneinheiten (111, 112, 113, 121, 122, 131, 132, 133) und eine oder mehrere Außeneinheiten (110, 120, 130) aufweist;
einen Generator (70) zum Versorgen der Klimaanlage mit einem Betriebsenergieversorgungssignal; und
eine Verteilungseinheit (80, 80') zur Ermittlung von Energiewerten von Einzelphasenbetriebsenergieversorgungssignalen der Klimaanlage, Änderung einiger Teile von Phasen des Energieversorgungssignals, das vom Generator (70) zur Klimaanlage übertragen wird, und Herstellung eines Dreiphasengleichgewichts.

3. Klimaerzeugungsanlage nach Anspruch 1 oder 2, wobei die Außeneinheiten (110, 120, 130) durch ein Dreiphasenenergieversorgungssignal betrieben werden.

4. Klimaerzeugungsanlage nach Anspruch 1, 2 oder 3, wobei die Inneneinheiten (111, 112, 113, 121, 122, 131, 132, 133) durch ein Einphasenenergieversorgungssignal betrieben werden.

5. Klimaerzeugungsanlage nach Anspruch 2, 3 oder 4, wobei die Verteilungseinheit (80) aufweist:
einen Sensor (81) zur Ermittlung eines Stromsignals, das in einer Verdrahtungsstruktur fließt, die das Energieversorgungssignal vom Generator (70) empfängt und das empfangene Energieversorgungssignal zu den Innen- und Außeneinheiten überträgt; und
eine Verteilungssteuereinrichtung (82) zur Berechnung der Summe des Einzelphasenenergieverbrauchs der Innen- und Außeneinheiten gemäß des Ausgangsstromwerts des Sensors (81) und Änderung der Verdrahtungsstruktur zu einer anderen Verdrahtungsstruktur, wenn eine Differenz in der Summe des Einzelphasenenergieverbrauchs vorliegt.

6. Anlage nach Anspruch 1, 2, 3, 4 oder 5, wobei die Inneneinheiten mit den Außeneinheiten kommunizieren und die Inneneinheiten (111, 112, 113, 121, 122, 131, 132, 133) Energieverbrauchsdaten zu den Außeneinheiten (110, 120, 130) übertragen.

7. Klimaerzeugungsanlage nach Anspruch 6, wobei die Verteilungseinheit (80') aufweist:
eine Kommunikationseinheit (83) zur Kommunikation mit den Außeneinheiten (110, 120, 130) und zum Empfangen von Energieverbrauchsdaten der Innen- und Außeneinheiten von den Außeneinheiten; und
eine Verteilungssteuereinrichtung (82') zur Berechnung der Summe des Einzelphasenenergieverbrauchs der Innen- und Außeneinheiten und Änderung einer Verdrahtungsstruktur, die zur Übertragung eines Energieversorgungssignals vom Generator (70) zu den Innen- und Außeneinheiten imstande ist, wenn eine Differenz in der Summe des Einzelphasenenergieverbrauchs vorliegt.

8. Klimaerzeugungsanlage nach Anspruch 5, 6 oder 7, wobei die Verteilungssteuereinrichtung (82, 82'), wenn eine Differenz im Einzelphasenenergieverbrauch vorliegt, ein Phasenenergieversorgungssignal, das einen kleineren Energieverbrauch aufweist, mit anderen Außeneinheiten oder anderen Inneneinheiten verbindet, und den Energieverbrauch des Phasenenergieversorgungssignals erhöht.

9. Anlage nach einem der Ansprüche 1 bis 8, wobei der Generator (70) ein Kraft-Wärme-Kopplungsgenerator ist.

10. Verfahren zum Beheben einer unsymmetrischen Phase in einer Klimaerzeugungsanlage, das die Schritte aufweist:
a) Berechnen des Energieverbrauchs von Innen- und Außeneinheiten (S1∼S3, S11∼S13);
b) Berechnen der Summe der berechneten Energieverbrauchswerte, um das Vorhandensein oder Fehlen der unsymmetrischen Phase (S4, S14) festzustellen; und
c) Ändern einer Verdrahtungsstruktur eines Energieversorgungssignals, das den Innen- oder Außeneinheiten zugeführt wird, wenn das Vorhandensein der unsymmetrischen Phase festgestellt wird (S5, S6, S15, S16).

11. Verfahren nach Anspruch 10, wobei der Schritt a) die Schritte aufweist:
a1) Ermitteln eines Werts eines Stromsignals, das von einem Generator zu den Außen- und Inneneinheiten (S2) übertragen wird; und
a2) Berechnen des Energieverbrauchs einzelner Außeneinheiten und Inneneinheiten auf der Grundlage des ermittelten Stromwerts (S3).

12. Verfahren nach Anspruch 10 oder 11, wobei der Schritt a) die Schritte aufweist:
a3) Übertragen von Daten, die mit dem Energieverbrauch in einem vorgegebenen Bereich verbunden sind, von den Inneneinheiten zu den Außeneinheiten (S12); und
a4) Berechnen eines Werts des Energieverbrauchs von einzelnen Innen- und Außeneinheiten auf der Grundlage der von den Außeneinheiten empfangenen Energieverbrauchsdaten (S13).

13. Verfahren nach Anspruch 10, 11 oder 12, das ferner die Schritte aufweist:
Ermöglichen, daß ein Generator ein Dreiphasenenergieversorgungssignal erzeugt, bevor der Schritt a) ausgeführt wird; und
Aufteilen des vom Generator erzeugten Dreiphasenenergieversorgungssignals in drei Einphasenenergieversorgungssignale und Versorgen der Außeneinheiten mit den Einphasenenergieversorgungssignalen (S1, S11).

14. Verfahren nach Anspruch 13, das ferner den Schritt aufweist:
Wiederholen der obigen Schritte, bis die unsymmetrische Phase des Dreiphasenenergieversorgungssignals behoben ist.

## Revendications

1. Système de conditionnement d'air capable de résoudre une phase non équilibrée, comprenant :
une pluralité d'unités d'intérieur (111, 112, 113, 121, 122, 131, 132, 133) ; et
une pluralité d'unités d'extérieur (110, 120, 130),
dans lequel les valeurs de puissance des signaux d'alimentation de commande de phase individuelle consommées par les unités d'intérieur et d'extérieur sont additionnées, et une structure de câblage d'alimentation de certaines parties des unités d'intérieur et d'extérieur est automatiquement changée en une autre structure de câblage lorsqu'il existe une différence dans les valeurs de consommation de puissance des phases individuelles, créant un équilibre triphasé.

2. Système de conditionnement d'air capable résoudre une phase non équilibrée, comprenant :
un système de conditionnement d'air comprenant une ou plusieurs unités d'intérieur (111, 112, 113, 121, 122, 131, 132, 133) et une ou plusieurs unités d'extérieur (110, 120, 130) ;
un générateur (70) pour fournir au système de conditionnement d'air un signal d'alimentation de commande ; et
une unité de distribution (80, 80') pour détecter les valeurs de puissance des signaux d'alimentation de commande de phase individuelle du système de conditionnement d'air, changer certaines parties des phases du signal d'alimentation transmis depuis le générateur (70) au système de conditionnement d'air, et établir un équilibre triphasé.

3. Système de conditionnement d'air selon la revendication 1 ou 2, dans lequel les unités d'extérieur (110, 120, 130) sont commandées par un signal d'alimentation triphasé.

4. Système de conditionnement d'air selon la revendication 1, 2 ou 3, dans lequel les unités d'intérieur (111, 112, 113, 121, 122, 131, 132, 133) sont commandées par un signal d'alimentation monophasé.

5. Système de conditionnement d'air selon la revendication 2, 3 ou 4, dans lequel l'unité de distribution (80) comprend :
un capteur (81) pour détecter un signal de courant s'écoulant dans la structure de câblage qui reçoit le signal d'alimentation en provenance du générateur (70) et qui transmet le signal d'alimentation reçu aux unités d'intérieur et d'extérieur ; et
un contrôleur de distribution (82) pour calculer la somme de la consommation de puissance de phase individuelle des unités d'intérieur et d'extérieur selon la valeur de courant de sortie du capteur (81), et changer la structure de câblage en une autre structure de câblage lorsqu'il existe une différence dans la somme de la consommation de puissance de phase individuelle.

6. Système selon la revendication 1, 2, 3, 4 ou 5, dans lequel les unités d'intérieur communiquent avec les unités d'extérieur, et les unités d'intérieur (111, 112, 113, 121, 122, 131, 132, 133) transmettent les données de consommation de puissance aux unités d'extérieur (110, 120, 130).

7. Système de conditionnement d'air selon la revendication 6, dans lequel l'unité de distribution (80') comprend :
une unité de communication (83) pour communiquer avec les unités d'extérieur (110, 120, 130), et recevoir les données de consommation de puissance des unités d'intérieur et d'extérieur en provenance des unités d'extérieur ; et
un contrôleur de distribution (82') pour calculer la somme de la consommation de puissance de phase individuelle des unités d'intérieur et d'extérieur, et changer une structure de câblage capable de transmettre un signal d'alimentation en provenance du générateur (70) aux unités d'intérieur et d'extérieur lorsqu'il existe une différence dans la somme de la consommation de puissance de phase individuelle.

8. Système de conditionnement d'air selon la revendication 5, 6 ou 7, dans lequel le contrôleur de distribution (82, 82'), s'il existe une différence dans la consommation de puissance de phase individuelle, relie un signal d'alimentation de phase ayant une consommation de puissance inférieure à d'autres unités d'extérieur ou d'autres unités d'intérieur, et augmente la consommation de puissance du signal d'alimentation de phase.

9. Système selon l'une quelconque des revendications 1 à 8, dans lequel le générateur (70) est un générateur de production combinée.

10. Procédé pour résoudre une phase non équilibrée dans un système de conditionnement d'air, comprenant les étapes consistant à :
a) calculer la consommation de puissance des unités d'intérieur et d'extérieur (S1∼S3, S11∼S13) ;
b) calculer la somme des valeurs de consommation de puissance calculées pour déterminer la présence ou l'absence de la phase non équilibrée (S4, S 14) ; et
c) changer une structure de câblage d'un signal d'alimentation fourni aux unités d'intérieur ou d'extérieur lorsque la présence de la phase non équilibrée est déterminée (S5, S6, S15, S16).

11. Procédé selon la revendication 10, dans lequel l'étape a) comprend les étapes consistant à :
a1) détecter une valeur d'un signal de courant transmis depuis un générateur aux unités d'extérieur et d'intérieur (S2) ; et
a2) calculer la consommation de puissance des unités d'extérieur et des unités d'intérieur individuelles sur la base de la valeur de courant détectée (S3).

12. Procédé selon la revendication 10 ou 11, dans lequel l'étape a) comprend les étapes consistant à :
a3) transmettre les données associées à la consommation de puissance dans une plage prédéterminée depuis les unités d'intérieur aux unités d'extérieur (S12) ; et
a4) calculer une valeur de consommation de puissance des unités d'intérieur et des unités d'extérieur individuelles sur la base des données de consommation de puissance reçues des unités d'extérieur (S13).

13. Procédé selon la revendication 10, 11 ou 12, comprenant également les étapes consistant à :
permettre à un générateur de générer un signal d'alimentation triphasé avant de réaliser l'étape a) ; et
diviser le signal d'alimentation triphasé généré depuis le générateur en trois signaux d'alimentation monophasés, et fournir aux unités d'extérieur les signaux d'alimentation monophasés (S1, S11).

14. Procédé selon la revendication 13, comprenant également l'étape consistant à :
répéter les étapes précédentes jusqu' à ce que la phase non équilibrée du signal d'alimentation triphasé soit résolue.
